Europäisches Patentamt

**European Patent Office**

**Office européen des brevets**

(11) Numéro de publication: **0 039 381**
A1

# (12) DEMANDE DE BREVET EUROPEEN

(21) Numéro de dépôt: **80810173.7**

(51) Int. Cl.³: **B 23 D 15/06,** B 23 D 33/02

(22) Date de dépôt: **23.05.80**

(30) Priorité: **23.04.80 CH 3148/80**

(71) Demandeur: **Beyeler Machines S.A., Chemin des Lentillières 1, CH-1023 Crissier (CH)**

(43) Date de publication de la demande: **11.11.81 Bulletin 81/45**

(72) Inventeur: **Huber, Arthur, Chemin Claude-Anet 1, CH-1110 Morges (CH)**

(84) Etats contractants désignés: **AT BE DE FR GB IT LU NL SE**

(74) Mandataire: **Bertini Tozzi, Adriano, Rue de la Grotte 6, CH-1003 Lausanne (CH)**

(54) **Procédé et dispositif de coupe pour matériaux lourds.**

(57) Le dispositif pour couper du matériel lourd est constitué par un couteau fixe (8) et un couteau mobile (7). Le couteau mobile (7) est entraîné par le piston d'un cylindre hydraulique (6) à tourner autour d'un pivot (3) de façon à avoir un mouvement pendulaire de coupe depuis le bas vers le haut.

Un tablier mobile (2) fixé à un système d'appui (4) du côté de la coupe et du côte opposé au piston (6) d'un ou plusieurs cylindres (5) est positionné de façon à pouvoir soutenir et accompagner les tôles pendant la coupe et, au moyen du piston du cylindre (5), les faire descendre du côté opposé à la coupe, de façon à faire glisser sans tomber les tôles coupées.

Le but de la présente invention est celui de réduire le bruit dans les machines genre cisailles, surtout dans la phase de stockage des tôles coupées.

0039381

"Procédé et dispositif de coupe pour matériaux lourds"

La présente invention a trait à un procédé de coupe de matériaux lourds, du genre tôles en acier, d'une certaine épaisseur, et au dispositif qui le réalise.

Dans les ateliers de tôlerie, de serrurerie, de chaudronnerie, il est bien connu que le problème du bruit n'a pas encore été résolu d'une façon satisfaisante. Ces ateliers se trouvent, pour la plupart, dans des positions géographiques telles qui permettent de ne pas trop déranger les gens habitant dans les environs.

L'actuelle politique, à l'intérieur des usines, est de rendre les places de travail plus confortables pour les travailleurs. Et l'un des gros problèmes y est encore aujourd' hui le problème du bruit.

Il est bien connu que les ateliers qui travaillent des tôles épaisses ou fines arrivent à avoir des niveaux de bruit qui sont réellement insoutenables pour n'importe quel travailleur. Dans ces ateliers, les travailleurs sont obligés d'utiliser des oreillons pour amortir l'intensité du bruit, et même ainsi, on est à la limite du supportable pour l'être humain.

Dans les systèmes de coupe des tôles en acier, la phase la plus bruyante est celle où les tôles coupées tombent. Pendant cette phase, le bruit à environ deux mètres de la machine peut atteindre le niveau de 120 décibels. N'importe quel être humain n'est pas en mesure de résister tout au long d'une journée de travail à côté d'un bruit rythmique de cette intensité. Dans les usines où on travaille la tôle lourde, souvent le bruit d'une cisaille se superpose au bruit de presses et d'autres machines tout aussi bruyantes.

Le résultat est absolument infernal, et même avec les oreillons, les travailleurs qui se trouvent en plein milieu des machines qui travaillent, sont soumis à une épreuve qui dépasse toute limite humaine.

Les constructeurs de machines de ce genre sont aujourd'hui en train d'essayer de trouver de nouvelles solutions au problème.

Le problème du bruit peut être résolu par une cisaille hydraulique selon un procédé de coupe de matériaux lourds, caractérisé par le fait que la coupe est effectuée depuis le bas vers le haut.

Le procédé est réalisé par un dispositif caractérisé par le fait qu'il se compose d'un tablier mobile 2, positionné transversalement par rapport au plan de coupe, disposé de façon à pouvoir retenir le matériel coupé pour le descendre au niveau d'un système d'emmagasinage de parties coupées, et d'un couteau mobile 7, fixé sur un support pivotant qui l'oblige à avoir un mouvement circulaire de coupe.

Le système consiste à couper les tôles depuis le bas vers le haut, contrairement à ce qu'on fait actuellement, de façon à pouvoir retrouver sur un tablier mobile la tôle coupée qui est soutenue et accompagnée dans le mouvement de coupe par le tablier mobile.

Une fois la coupe terminée, la tôle se trouve sur un plan en général horizontal, sans qu'il y ait eu le bruit typique de tôles qu'on laisse tomber.

Une fois que la tôle coupée se trouve sur le tablier mobile, celui-ci est descendu de façon à pouvoir faire glisser la tôle dans un système d'empilage classique.

Dans la phase de travail, on a donc évité le bruit le plus fort de toute l'opération, c'est-à-dire le bruit produit par la tôle coupée qui tombe sur un tablier fixe ou mobile.

Le système présente encore d'autres avantages par rapport aux systèmes traditionnels, outre celui de la réduction du bruit : un système de coupe selon l'invention, il a aussi la fonction de recueillir les tôles coupées qui viennent se trouver dans une position plus élevée par rapport aux machines conventionnelles. Cela veut dire que l'empilage des tôles, qui est fait par un système positionné à côté du tablier, là où celui-ci a sa partie basculante vers le bas, rend possible le stockage de beaucoup plus de tôles coupées, du fait que les tôles sont emmagasinées sur une hauteur de pièces stockées supérieure à celle qu'on peut avoir dans des machines conventionnelles.

L'invention sera mieux comprise à l'aide des dessins annexés montrant, à titre d'exemple, le dispositif utilisé comme cisaille. Dans les dessins :

la fig. 1 représente une vue du dispositif depuis 3/4 postérieur en perspective, et la

fig. 2 représente le dispositif en coupe partielle et en perspective, avec le couteau mobile dans sa position supérieure et le tablier mobile dans sa position inférieure.

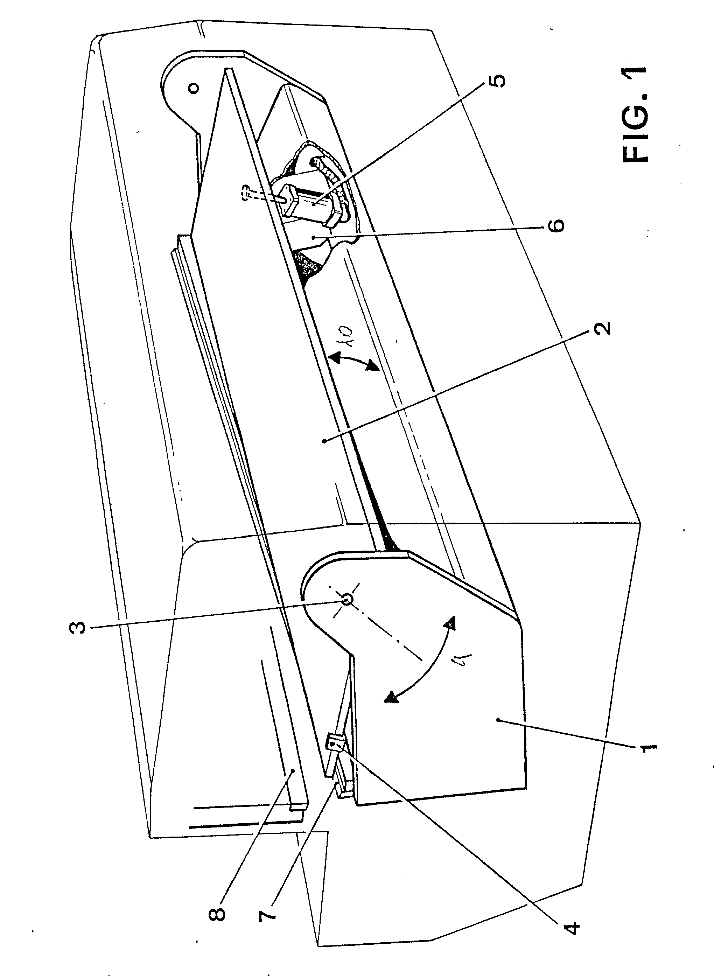

A la fig. 1, le dispositif est montré en mettant en évidence le système de coupe et soutènement, avec accompagnement des tôles coupées. Tout le système mobile tourne autour d'un pivot 3 qui est fixé au support pivotant 1 et qui permet au couteau 7 d'avoir un arc de travail dans le sens indiqué par la flèche dessinée sur le support pivotant.

Le système mobile est mis en rotation par le cylindre hydraulique 6. La coupe s'effectue entre le couteau 7 mobile et incliné sur l'horizontale entre un à cinq degrés, selon l'épaisseur de la tôle, et le couteau 8 solidaire avec la partie fixe de la machine.

Le tablier mobile 2 tourne selon la direction indiquée par la flèche autour d'un système d'appui 4, et il est mis en mouvement par le cylindre 5.

Le rôle du tablier mobile est celui de soutenir les tôles pendant la coupe et de les faire glisser sans tomber dans un système d'empilage non représenté, qui doit être positionné à côté du tablier 2 lorsqu'il se trouve dans sa position la plus basse.

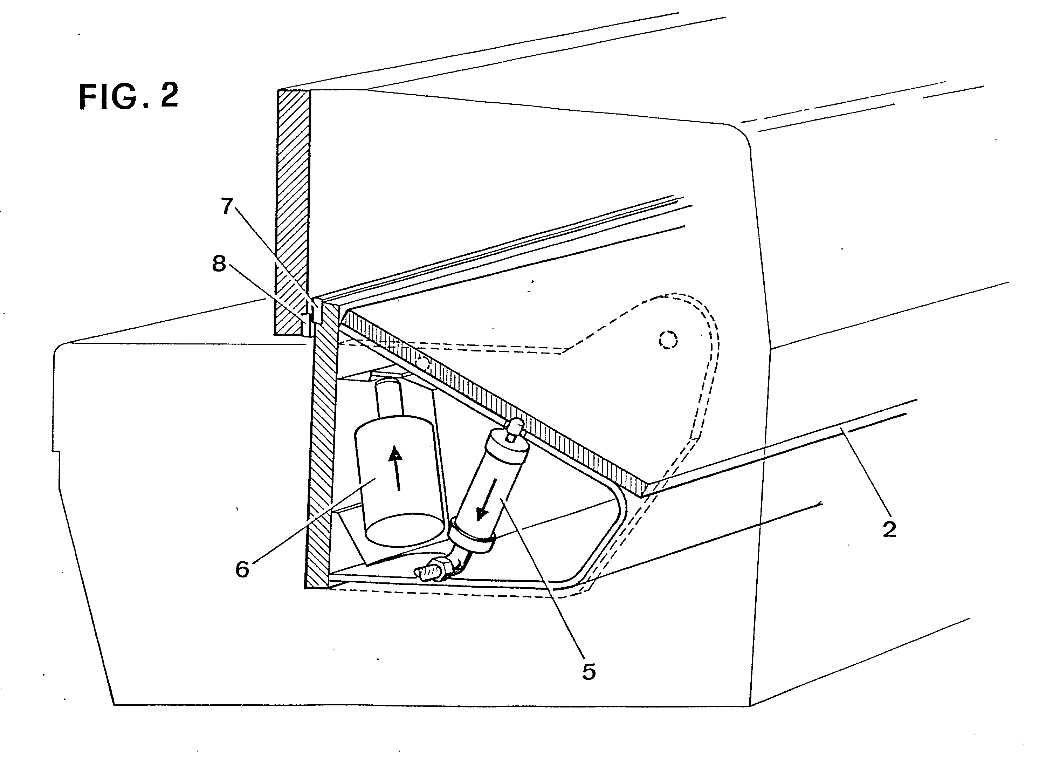

La fig. 2 montre le support pivotant dans sa position supérieure immédiatement après avoir terminé la phase de coupe de la tôle. Dans cette représentation, le piston du cylindre hydraulique 6 se trouve dans sa position supérieure et le piston du cylindre 5, qui permet le mouvement du tablier mobile 2, se trouve dans sa position inférieure.

Cette position permet à la tôle coupée de glisser sans tomber, donc avec un minimum de bruit, sur le tablier mobile 2.

Le dispositif est constitué par un couteau fixe 8 et un couteau mobile 7 entraîné par un système mis en mouvement par le cylindre hydraulique 6. Tout le système mobile peut basculer autour du pivot 3 de façon à permettre un mouvement de coupe pendulaire.

Le tablier mobile 2 repose d'un côté sur le système d'appui 4 et de l'autre côté il est soutenu par le piston du cylindre 5.

Le tablier mobile 2 est positionné de façon à se trouver toujours quelques millimètres plus bas que l'endroit de coupe entre le couteau fixe 8 et le couteau mobile 7.

Quand le couteau mobile 7 arrive dans sa position finale tout en haut, le tablier mobile 2 accompagne le système du couteau mobile pour la toute dernière partie de sa course. A partir du moment où le couteau mobile 7 se trouve dans sa position supérieure et qu'il commence à redescendre contrôlé par le piston du cylindre hydraulique 6, le tablier mobile 2 peut commencer à effectuer son mouvement de descente contrôlé par le piston du cylindre 5.

Dans une autre forme d'exécution, non représentée, le couteau mobile est fourni de deux cylindres hydrauliques aux deux extrémités du support 1. De cette façon, on aura un mouvement de translation depuis le bas vers le haut du couteau mobile 7 par rapport au couteau fixe 8, à la place d'un mouvement de rotation du couteau mobile 7 par rapport au couteau fixe 8.

Ceci n'empêche pas d'avoir le même fonctionnement du tablier mobile 2, qui permettra dans la même mesure aux tôles coupées de glisser plutôt que de tomber.

Dans une troisième forme d'exécution non représentée, particulièrement pour la coupe de tôles en aluminium ou inox, le tablier mobile 2 est fourni de deux pistons aux deux extrémités du côté de la coupe et du côté opposé à la coupe par rapport au tablier. Des glissières sont prévus dans le support 1, et le tablier mobile 2 descend après la coupe sans pivoter autour du système d'appui 4. Dans cette forme d'exécution, il faut prévoir un dispositif qui permet de déplacer les tôles une fois que le tablier 2 a été descendu à sa position inférieure.

- 6 -

REVENDICATIONS

1. Procédé pour couper du matériel lourd, du type dans lequel agissent deux couteaux dont l'un est fixe, caractérisé par le fait que la coupe est effectuée depuis le bas vers le haut.

2. Dispositif pour réaliser le procédé selon la revendication 1, caractérisé par le fait qu'il comprend un tablier mobile (2) positionné transversalement par rapport au plan de coupe, disposé de façon à pouvoir retenir le matériel coupé pour le descendre au niveau d'un système d'emmagasinage des parties coupées, et d'un couteau mobile (7) fixé sur un support pivotant qui l'oblige à avoir un mouvement circulaire de coupe.

3. Dispositif selon la revendication 2, caractérisé en ce que le couteau mobile (7) est fixé aux supports latéraux qui l'entraînent à effectuer un mouvement de coupe en ligne droite.

4. Dispositif selon la revendication 2, caractérisé par le fait que le mouvement de rotation autour d'un pivot (3) est donné par un cylindre hydraulique (6).

5. Dispositif selon la revendication 3, caractérisé en ce que le mouvement de translation vers le haut est donné par deux cylindres hydrauliques parallèles.

6. Dispositif selon la revendication 2, caractérisé en ce que le tablier mobile (2) descend par rotation autour d'un système d'appui (4) par un mouvement imposé par le cylindre (5).

7. Dispositif selon la revendication 2, caractérisé en ce que le tablier mobile descend d'une façon symétrique, entraîné par le mouvement parallèle et égal de deux cylindres hydrauliques.

8. Dispositif selon la revendication 2, caractérisé en ce que le tablier mobile descend d'une façon asymétrique entraîné par un mouvement coordonné et différent de deux cylindres hydrauliques.

FIG. 1

# FIG. 2

0039381

Office européen
des brevets

**RAPPORT DE RECHERCHE EUROPEENNE**

003938.1 Numéro de la demande

EP 80 81 0173.7

## DOCUMENTS CONSIDERES COMME PERTINENTS

| Catégorie | Citation du document avec indication, en cas de besoin, des parties pertinentes | Revendication concernée |
|---|---|---|
| X | FR - A - 2 114 032 (PROMECAM SISSON-LEHMANN) <br> * page 2, ligne 25 à page 3, ligne 7; fig. 1 * | 1-5 |
| X | GB - A - 786 681 (SCHLOEMANN AG) <br> * revendication 1; fig. 1 * | 1 |
| | DE - U - 1 884 150 (E. WIEGER) <br> * page 1, ligne 1 à page 2, ligne 12; fig. 1, 2 * | 2 |
| | FR - A1 - 2 241 370 (HAMMERLE AG) <br> * revendication 1; fig. 1, 2 * | 2 |
| A | GB - A - 1 216 518 (HAMMERLE AG) <br> & FR - A - 1 573 666 | |
| A | CH - A - 504 922 (FABRIQUE DE MACHINES BEYELER) | |
| A | MASCHINENMARKT, Vol. 83, No. 72, 1977 <br> Würzburg <br> H. DITS "Mehrere lineare Arbeitsbewegungen hydraulisch synchronisieren" pages 1394 à 1396 | |

**CLASSEMENT DE LA DEMANDE (Int. Cl.³)**

B 23 D 15/06
B 23 D 33/02

**DOMAINES TECHNIQUES RECHERCHES (Int. Cl.³)**

B 23 D 15/00
B 23 D 33/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 10-07-1981 | MARTIN |

OEB Form 1503.1 06.78